# EUROPEAN PATENT SPECIFICATION

(11) **EP 1 718 459 B1**
(45) Date of publication and mention of the grant of the patent: **22.11.2017**
(21) Application number: 05779475.2
(22) Date of filing: 02.02.2005
(51) Int. Cl.: B32B 15/00

(54) **ALUMINUM-FIBER LAMINATE**
ALUMINIUMFASERLAMINAT
FIBRE D'ALUMINIUM STRATIFIÉE

(30) Priority: 10.02.2004 US 775564
(43) Date of publication of application: 08.11.2006
(73) Proprietor: The Boeing Company, Chicago, IL 60606-1596 (US)
(72) Inventor: WINGERT, A., Lew, Maple Valley, WA 98038 (US); AXTER, Sven, E, Bellevue, WA 98006 (US); TUSS, Gary, D., Bellevue, WA 98004 (US); LI, Edward, Seattle, WA 98126 (US); WESTRE, Willard, N., Bellevue, WA 98006 (US); SOLEIMAN, Moe, K, Bellevue, WA 98005 (US); GRACE, William, B., Seattle, WA 98115 (US); BLOHOWIAK, Kay, Y., Issaquah, WA 98027 (US); CHEN, Judy, S, Bellevue, WA 98006 (US)
(74) Representative: Boult Wade Tennant
(86) International application number: PCT/US2005/002858
(87) International publication number: WO 2005/110736

(56) References cited:
- EP-A- 0 323 660
- WO-A-2004/071761
- US-A- 5 429 326
- US-B1- 6 736 919

## Description

### FIELD OF THE INVENTION

This invention relates generally to composite materials, and, more specifically, to fiber-reinforced laminates.

### BACKGROUND OF THE INVENTION

Equipment such as aircraft commonly use aluminum alloys for structure and skin material. Because it is desirable to reduce weight of an aircraft, use of lightweight composite materials has also become common on aircraft. These lightweight composites include fiber metal laminates (FML). As an example, composite aluminum-fiber laminates and other metal-fiber laminates have been developed utilizing carbon and glass fiber layers interspersed between layers of aluminum or other metals. Many lower modulus fibers are not galvanically reactive with aluminum. However, low modulus fibers such as glass often may not have a sufficiently high modulus of elasticity to carry significant loads without potentially over-stressing or fatiguing the aluminum layers when the laminate is under repeated loading.

It would be desirable to use fibers having high strength characteristics, such as high modulus fibers. However, high modulus fibers, such as graphite, are often galvanically reactive with the metals in the laminate.

Therefore there exists an unmet need in the art for a fiber metal laminate with fibers having a high modulus of elasticity and reduced galvanic reactivity.

EP-A-0323660 discloses a process for manufacturing a laminate of metal sheets and filaments-reinforced synthetic layers.

US-A-5429323 discloses a spliced laminate for aircraft fuselage.

### SUMMARY OF THE INVENTION

In accordance with the present invention there is provided a fiber-metal laminate as set out in claim 1 and a method for producing a fiber-metal composite as set out in claim 87.

Embodiments of the present invention provide a fiber metal laminate with fibers having a high modulus and low galvanic reactivity. The fiber metal laminate advantageously is an aluminum-fiber laminate. Fiber metal laminates of the present invention have suitably high strength characteristics and low galvanic reaction that they are well suited for structure and skin material of equipment such as aircraft.

Exemplary embodiments of the present invention provide a fiber metal laminate. At least two metallic layers are provided and at least one fiber layer is bonded between the two metallic layers. The fiber layer suitably includes a resin matrix and organic polymeric fibers with a modulus of elasticity greater than around 270 GPa. The polymeric fibers include poly diimidazo pyridinylene fibers. In accordance with other aspects of the invention, the metallic layers may include pre-treated aluminum alloy layers.

### BRIEF DESCRIPTION OF THE DRAWINGS

The preferred and alternative embodiments of the present invention are described in detail below with reference to the following drawings.
FIGURE 1 is a cutaway isometric drawing of an exemplary fiber metal laminate according to an embodiment of the present invention;
FIGURE 2 is a cutaway isometric drawing of an exemplary fiber metal laminate according to an alternate embodiment of the present invention;
FIGURE 3 is a cutaway isometric drawing of an exemplary fiber metal laminate according to another alternate embodiment of the present invention;
FIGURE 4A is a cross-section of an exemplary fiber metal laminate according to a further alternate embodiment of the present invention;
FIGURE 4B is a cross-section of an exemplary fiber metal laminate according to a further alternate embodiment of the present invention;
FIGURE 5A is an isometric view of an exemplary fiber metal laminate with a honeycomb core layer of the present invention;
FIGURE 5B is a cross section of an exemplary fiber metal laminate aircraft fuselage segment including a honeycomb core layer of the present invention; and
FIGURE 6 is a flow chart of an exemplary method for manufacturing a fiber metal laminate of the present invention.

### DETAILED DESCRIPTION OF THE INVENTION

By way of overview, exemplary embodiments of the present invention provide a fiber metal laminate. At least two metallic layers are provided and at least one fiber layer is bonded between the two metallic layers. The fiber layer suitably includes
a resin matrix and organic polymeric fibers with a modulus of elasticity greater than around 270 GPa. The polymeric fibers include poly diimidazo pyridinylene fibers. In accordance with other aspects of the invention, the metallic layers may include pre-treated aluminum alloy layers.

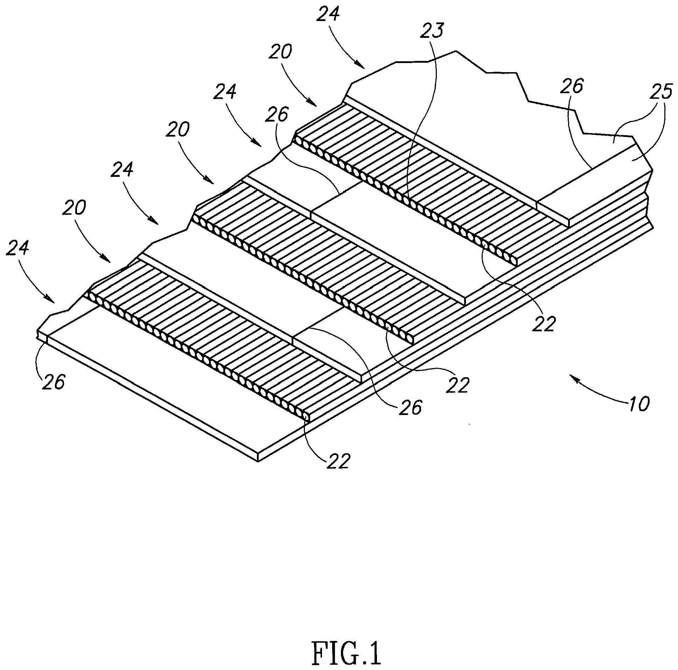

Referring to FIGURE 1, an exemplary, non-limiting fiber metal laminate 10 includes four metallic layers 24 and three fiber layers 20. Each fiber layer 20 is bonded between two of the metallic layers 24. In this non-limiting example, the laminate 10 includes seven layers. The outer two layers are the metallic layers 24. However, it will be appreciated that any number of layers may be provided as desired for a particular application.

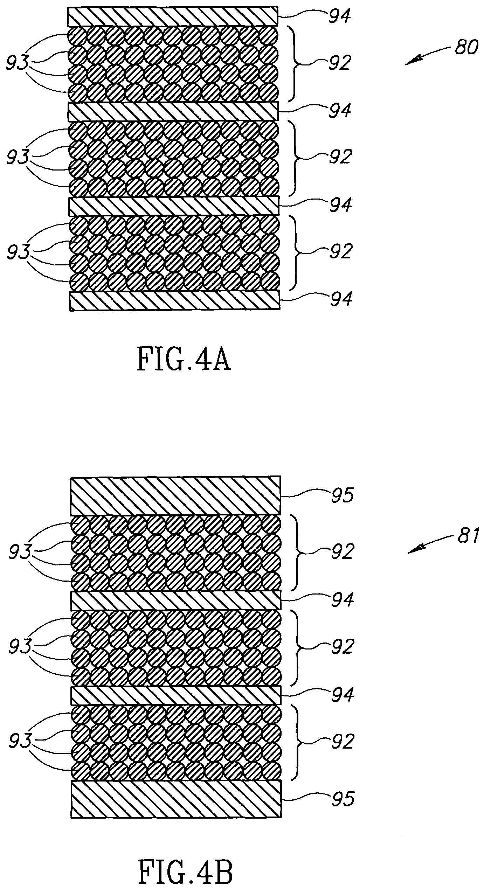

By way of example and not limitation, in one presently preferred embodiment the metallic layers 24 include heat treatable aluminum alloy foil layers between about 1.02x10⁻⁴m (0.004 inches) and about 6.35x10⁻⁴m (0.025) inches thick. Greater thickness foil layers may also be utilized, as described further in connection with FIGURE 4B below. The metallic layers 24 may include butt joints 26 between foil sections 25 within the metallic layers 24. The fiber layers 20 also suitably may include butt-jointed sections (not shown) to permit the laminate 10 to be manufactured in large sheets, depending upon the planned application for the laminate 10. Suitable aluminum alloy foils for the metallic layers 24 include heat treatable and non-heat treatable aluminum alloys of the 2000, 5000, 6000, and 7000 series, including without limitation 2024, 7075, and 7055. Other suitable metallic foils may include titanium and high strength stainless steel.

Use of the metallic layers 24 in conjunction with the fiber layers 20 allows the use of fewer or no cross-plys, as opposed to pure fiber composite laminates, for structures and skins that are primarily under tensile loads. The metallic layers 24 carry stress about equally in all directions in the plane of the metallic layer 24, while the fiber layers 20 typically exhibit substantially higher strength in a direction generally parallel to the fibers 22 than in a direction oblique to the fibers 22. Metallic layers 24 in the laminate 10 also add benefits of electrical conductivity, a moisture barrier, resistance to weather, and damage tolerance. The metallic layers 24 exhibit greater resistance to sharp objects than a fiber layer 20 alone, and show visible impact damage when impacted by other objects. In FIGURE 1, the fiber layers 20 all have their fibers 22 aligned in the same direction. It will be appreciated that in areas requiring high shear stiffness, for example such as aircraft wings and some fuselage areas, the fibers 22 may be aligned at any angle to each other, including 45° to a primary stress direction.

The fiber layers 20 advantageously include very high modulus polymer fibers that are not galvanically reactive with aluminum. The high modulus fibers 22 carry most of the stress applied to the laminate 10, while minimizing over-stressing and fatigue to the metallic layers 24. The very high modulus non-reactive polymer fibers permit the laminate 10 to be only about 10% to about 40% metal by weight. At the same time, for example for areas such as structural joints where additional multidirectional stress carrying capacity for complex loading is desired, the laminate 10 may be 10% to 50% metal by volume.

In one preferred embodiment, the fiber layers 20 include a resin matrix (not shown) that holds the polymer fibers 22. The resin matrix is often a thermohardening material; permitting heat cure of the laminate. Exemplary resin matrixes include, by way of example and not limitation, thermal curing epoxies and resins such as Toray 3900-2, Cytec CYCOM 934, and Hexcel F155; bismaleimide based adhesives such as Cytec 5250-4; and Cyanate Esters such as Stesalit PN-900. The matrix resins typically may be heat cured. The resins may be formed with the fibers 22 into "pre-pregs", that is pre-assembled pre-impregnated layers often including multiple layers of the fibers 22. Multiple pre-pregs (not shown) may form a fiber layer 20. The laminate 10 includes polymeric fibers including very high modulus non-reactive poly diimidazo pyridinylene fibers 22 with moduli of elasticity over around 270 GPa. Exemplary non-reactive fibers with very high moduli of elasticity include poly 2,6-diimidazo [4,5-b4',5'-e] pyridinylene-1,4 (2,5-dihydroxy) phenylenes ("PIPD"), such as M5 fiber, manufactured by Magellan Systems International, with a modulus of elasticity over 300 GPa. An alternate non-reactive very high elastic modulus polymer which falls outside the scope of the current invention is poly (p-phenylene-2, 6-benzobisoxazole) ("PBO"), such as Zylon, manufactured by Toyobo Co., Ltd of Osaka, Japan. The fibers 22 are typically assembled in alignment and embedded in a resin matrix to form fiber layers 20.

In a presently preferred embodiment, the metallic layers 24 are bonded to the fiber layers 20 during assembly of the laminate 10. The fiber layers 20 suitably may bond themselves to the metallic layers 24 when the laminate 10 is assembled and held under pressure during heat curing. However, bond strengths between the fiber layers 20 and the metallic layers 24 can be enhanced if desired, by way of example and not limitation, by pre-treatment of the metallic layers 24 and by using a separate adhesive between the metallic layers 24 and the fiber layers 20.

Suitable optional adhesives for increasing bond strength if desired between the fiber layers 20 and the metallic layers 24 include heat cured epoxies, such as without limitation Applied Poleramic, Inc., MSR-355 HSC, and Applied Poleramic, Inc. MSR-351. These epoxies (not shown) serve as an interphase adhesive between the fiber layers 20 and the metallic layers 24.

The metallic layers 24 themselves suitably may be pre-treated to increase adhesion to the fiber layers 20, thereby increasing the strength and durability of the laminate 10. Pre-treatments suitably may include a wide variety of metallic pre-treatments including acid or alkaline etching, conversion coatings, phosphoric acid anodizing, and the like. Such pre-treatments may increase surface roughness, thereby facilitating a stronger physical bond with the adhesive, or may facilitate a better chemical bond with the adhesive. In one presently preferred embodiment, a further alternate pre-treatment of applying a sol-gel coating to the metallic layers 24 may be utilized prior to assembly of the laminate 10. The sol-gel process commonly uses inorganic or organo-metallic pre-cursors to form an inorganic polymer sol. Sol-gel coatings include zirconium-silicone coatings, such as those described in Blohowiak, et al., U.S. Patent Nos 5,849,110; 5,869,140; and 6,037,060. The resulting inorganic polymer sol coating serves as an interphase layer between the metal layers 24 and the fiber layers 20 when they are bonded together. Pre-treatments may also include grit blasting. Grit blasting may also suitably cold work the alloys in the metallic layers 24. Further exemplary pre-treatments suitably may include heat treatment and wet honing.

It will be appreciated that including the metallic layers 24 in the laminate 10 permits all of the fibers 22 of the fiber layers 20 to be in alignment. Typically in composites that do not include the metallic layers 24, a 10%-90° rule is applied. As is known, this means that in a composite, approximately 10% of the fibers are oriented 90° to the primary axis of stress. The 10% of the fibers oriented at 90° to the primary axis of stress prevent disintegration in sheer of the composite. When the metallic layers 24 are combined with the fiber layers 20 such as the high elastic modulus, non-reactive polymer fibers 22, as low as 0% of the fibers 22 may be oriented at 90°, to the primary stress. Thus, a laminate 10 with all of the fibers 22 aligned in a common direction advantageously may be assembled and utilized without the added materials and manufacturing steps of including cross-plys.

In a presently preferred embodiment, the laminate 10 is suitably assembled by first pre-treating the metallic layers 24 as described above, if desired. The fiber layers 20 are then interspersed between the metallic layers 24. Adhesive (not shown) is applied at each boundary between a metallic layer 24 and a fiber layer 20. The resulting stack is placed in a vacuum bag. The vacuum bag is placed into an autoclave. A vacuum is applied to the vacuum bag, and the autoclave is pressurized.

The autoclave is heated to and held for a sufficient amount of time at a temperature suitable to activate and cure the adhesive (not shown) and the resin matrix (not shown) thereby curing the laminate 10. It will be appreciated that the temperatures and hold times for the autoclave correspond to those suitable for cure of the adhesive (not shown) and the resin matrix (not shown). In an exemplary embodiment, where Toray 3900-2 with a 177°C (350° F) cure resin is utilized for the resin matrix (not shown), the autoclave is heated to approximately 177°C (350° F) and held at that temperature for approximately 120 minutes. Typical cure temperatures for heat curing resin adhesives and matrix resins include cures between 121 °C (250° F) and 177°C (350° F) +/- 6 °C (10 °F) for approximately two hours. It will be appreciated that heat curing of the adhesive (not shown) in the matrix resin (not shown) advantageously may also simultaneously heat treat or heat age the metallic layers 24.

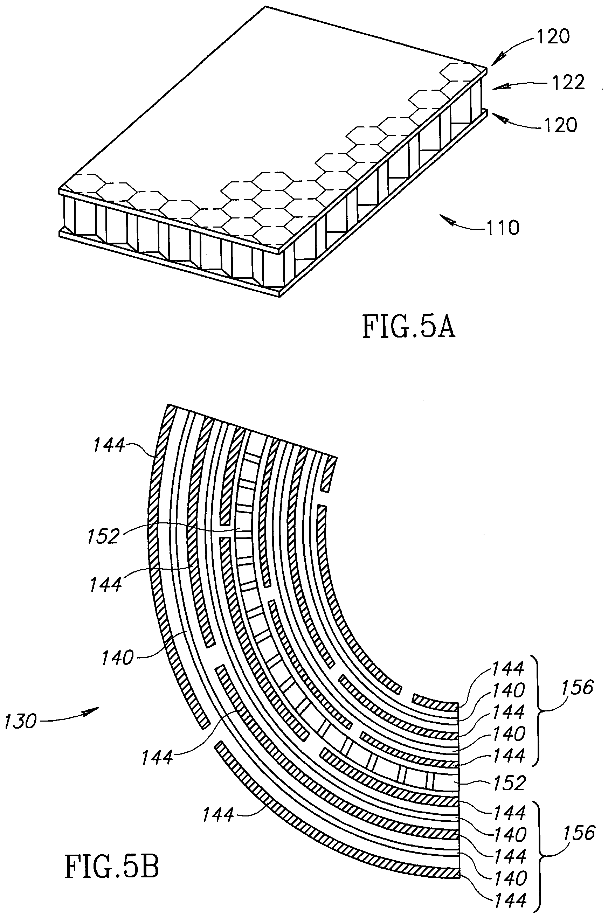

It will also be appreciated that during forming, the laminate 10 may be formed over a form or in a complex shape prior to cure. This permits the laminate 10 to be formed and cured into curved or segmented shapes such as a curved section described below in connection with FIGURE 5B.

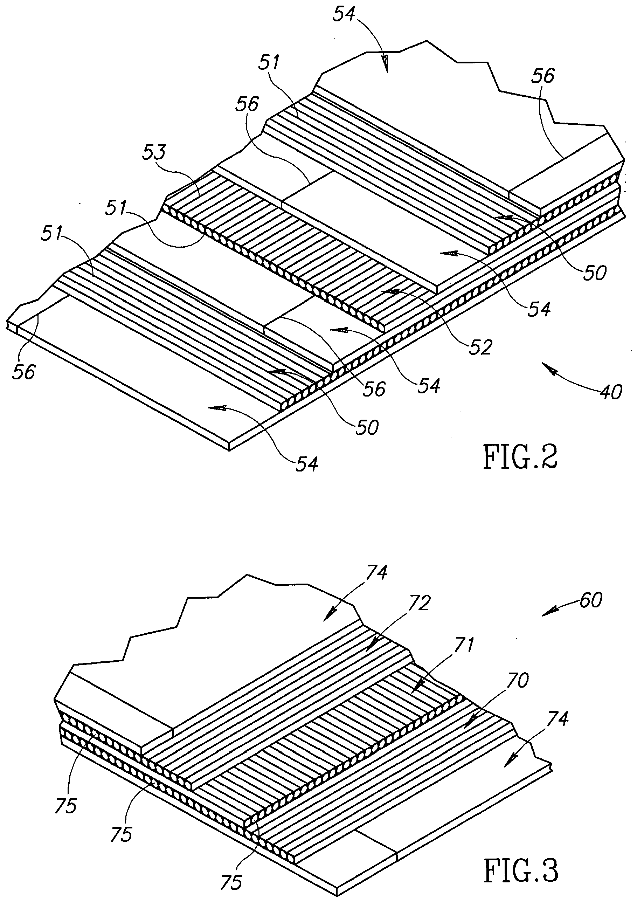

Turning to FIGURE 2, an alternate exemplary laminate 40 is shown in cutaway isometric view. Like the laminate 10 (FIGURE 1), the laminate 40 includes four metallic layers 54 plus three fiber layers 50 sandwiched between the metallic layers 54. However, it will be appreciated that any number of layers may be provided as desired for a particular application. The metallic layers 54 are assembled of metallic foils with butt joints 56 internal to the metallic layers 54. The metallic layers 54, fiber layers 50, matrix resins (not shown), adhesives (not shown), and assembly and cure methods for this laminate 40 suitably are as described above in connection with the laminate 10 (FIGURE 1). However, in this exemplary embodiment, the fibers 51 in the fiber layers 50 are not all aligned in a common direction as in the laminate 10 (FIGURE 1). Instead, two of the fiber layers 50 have their fibers 51 in alignment, and the third fiber layer 50 has its fibers 51 oriented 90° to the direction of the other two fiber layers 50. As a result, the laminate 40 has greater multidirectional strength than the laminate 10 (FIGURE 1), at the expense of somewhat decreased strength in the direction of alignment of the fibers 51 in the two aligned fiber layers 50. As noted above, the laminate 40 may also include fibers aligned in any combination of directions suitable for the application where the laminate 40 is being utilized.
It will be appreciated that, multiple fiber layers 50 may be positioned between two metallic layers 54, thereby increasing the ratio of fiber layers 50 to metallic layers 54. Referring now to FIGURE 3, an exemplary laminate 60 includes two metallic
layers 74. Three fiber layers 70, 71, and 72 are sandwiched between the two metallic layers 70. In this embodiment the three fiber layers include two primary fiber layers 70 and 72 with their fibers 75 oriented in a primary direction, and one secondary fiber layer 71 intermediate the two primary fiber layers 70 and 72 with its fibers oriented 90° to the direction of the fibers 75 of the primary layers 70 and 72. It will be appreciated that multiple fiber layers may be assembled together and sandwiched between a varying number of metallic layers 74 depending upon the stress to be applied to the component utilizing the laminate 60. In FIGURE 3, the materials and assembly methods also suitably are those as described in reference to FIGURE 1.

Referring now to FIGURE 4A, a further exemplary laminate 80 of the present invention includes four metallic layers 94. In this embodiment, by way of example and not limitation, between each pair of the metallic layers 94 is a multi-tier fiber layer 92. Each multi-tier fiber layer 92 includes four tiers or layers of fibers 93, all in common alignment. The resulting laminate 80 thus includes twelve tiers of fibers 93 and four metallic layers 94. The materials and assembly methods used for the laminate 80 suitably are those as described in reference to FIGURE 1.

For some applications it may be advantageous for one or more of the metallic layers of the laminate to be thicker than the other layers. In FIGURE 4B, another exemplary laminate 81 is similar to the laminate 80 of FIGURE 4A except laminate 81 includes outermost metallic layers 95 thicker than the other metallic layers 94. Thicker metallic layers, by way of example but not limitation, may provide additional lightning protection when incorporated on the outside of the laminate 81, may provide additional thickness for landing fasteners, brackets, or other connections, or may provide additional thickness for later chemical milling to form more complicated surface configurations and thicknesses.

It will be appreciated that a hollow core layer may be incorporated into a high modulus fiber-metal laminate. Referring now to FIGURE 5A, an exemplary hollow core laminate 110 includes a honeycomb core layer 122 sandwiched between two fiber metallic composite layers 120 such as those described in reference to FIGURES 1 through 4 above. Without limitation, the hollow core layer 122 in the exemplary laminate 110 is a hexagonal celled honeycomb layer 122. Such honeycombs include aluminum honeycombs manufactured by Hexcel Corporation. It will be appreciated that incorporating a hollow core 122 into a fiber metal laminate 110 increases the stiffness of the laminate 110.

The high modulus fiber laminate of the present invention advantageously may be incorporated into aircraft components. Referring now to FIGURE 5B, a fuselage skin section 130 incorporates exemplary laminates of the present invention. The fuselage section 130 is formed into a cylindrical or conical shape (shown here in two-dimensional cross section), as desired for a particular application. In this exemplary embodiment, the fuselage section 130 includes a hollow core layer 152 sandwiched between high modulus fiber layers 140 and metallic layers 144 that are all assembled and cured into one pre-formed fuselage section 130. In this exemplary embodiment, on each side of the hollow core layer 152 is a multi-layer fiber metal laminate assembly 156. Each assembly 156 includes three metallic layers 144 of butt joined aluminum alloy foil and two fiber layers 140. The fiber layers 140 are sandwiched between the metallic layers 144. The fuselage section 130 is assembled of the materials and in the manner described in reference to FIGURE 1 above. The resulting fuselage section 130 thus includes (from outside to inside) a metallic layer 144, a fiber layer 140, a metallic layer 144, a fiber layer 140, a metallic layer 144, the hollow core layer 152, a metallic layer 144, a fiber layer 140, a metallic layer 144, a fiber layer 140, and, a final metallic layer 144. As mentioned above, it will be appreciated that having a metallic layer 144 at the outside and inside of the fuselage section 130 suitably adds moisture protection, damage resistance, and weather resistance to the assembly.

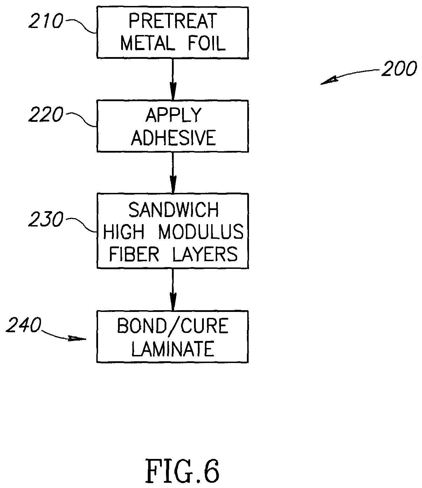

Turning to FIGURE 6, an exemplary method 200 of assembling the fiber metal laminate of the present invention begins at a block 210 at which metallic foil layers are pre-treated. Pre-treatments at the block 210 include pre-treatments such as sol-gel coating, as described in reference to FIGURE 1 above. After pre-treatment of the metallic foil, adhesive is applied to areas that will form junctions between the metal and fiber layers at a block 220. At a block 230 the laminate assembly is laid up by sandwiching fiber layers between metallic layers. At a block 240 the laminate is cured in a manner described in reference to FIGURE 1 above. Curing typically includes heat curing. This results in bonding of the high modulus fiber layers to the metallic layers thereby forming the fiber metal laminate of the present invention.

## Claims

1. A fiber-metal laminate (10, 40, 60, 80, 81, 110) comprising:
at least two metallic layers (24, 54, 74, 94, 95); and
at least one fiber layer (20, 50, 70, 71, 72, 93, 140) disposed between the at least two metallic layers (24, 54, 74, 94, 95, 144), the at least one fiber layer (20, 50, 70, 71, 72, 93) including a resin matrix and organic polymeric fibers (22, 51, 75) with a modulus of elasticity greater than 270 GPa; **characterised in that**
the polymeric fibers (22, 75) include poly diimidazo pyridinylene fibers.

2. The laminate of Claim 1 (10, 40, 60, 80, 81, 110), wherein the at least one fiber layer (20, 50, 70, 71, 72, 93, 140) is bonded to the at least two metallic layers (24, 54, 74, 94, 95, 144).

3. The laminate of Claim 1 (10, 40, 60, 80, 81, 110), wherein the polymeric fibers (22, 75) are not galvanically reactive with the metallic layers (24, 54, 74, 94, 95, 144).

4. The laminate of Claim 1 (10, 40, 60, 80, 81, 110), wherein the poly diimidazo pyridinylene fibers include poly {2,6-diimidazo [4,5-b4',5'-e] pyridinylene-1,4(2,5-dihydroxy) phenylene} fibers.

5. The laminate of Claim 1 (10, 40, 60, 80, 81, 110), wherein the at least two layers (24, 54, 74, 94, 95, 144) include an aluminum alloy.

6. The laminate of Claim 1 (10, 40, 60, 80, 81, 110), wherein the aluminum alloy includes a heat treatable aluminum alloy.

7. The laminate of Claim 5 (10, 40, 60, 80, 81, 110), wherein the aluminum alloy includes 2024 aluminum alloy.

8. The laminate of Claim 5 (10, 40, 60, 80, 81, 110), wherein the aluminum alloy includes 7075 aluminum alloy.

9. The laminate of Claim 5 (10, 40, 60, 80, 81, 110), wherein the aluminum alloy includes 7055 aluminum alloy.

10. The laminate of Claim 5 (10, 40, 60, 80, 81, 110), wherein the aluminum alloy includes a Series 2000 aluminum alloy.

11. The laminate of Claim 5 (10, 40, 60, 80, 81, 110), wherein the aluminum alloy includes a Series 7000 aluminum alloy.

12. The laminate of Claim 5 (10, 40, 60, 80, 81, 110), wherein the aluminum alloy includes a Series 5000 aluminum alloy.

13. The laminate of Claim 5 (10, 40, 60, 80, 81, 110), wherein the aluminum alloy includes a Series 6000 aluminum alloy.

14. The laminate of Claim 1 (10, 40, 60, 80, 81, 110), wherein the at least two layers (24, 54, 74, 94, 95, 144) include a titanium alloy.

15. The laminate of Claim 1 (10, 40, 60, 80, 81, 110), wherein the at least two layers (24, 54, 74, 94, 95, 144) include a stainless steel alloy.

16. The laminate of Claim 1 (10, 40, 60, 80, 81, 110), wherein the resin matrix includes an epoxy resin.

17. The laminate of Claim 1 (10, 40, 60, 80, 81, 110), wherein the resin matrix includes a thermohardening material.

18. The laminate of Claim 1 (10, 40, 60, 80, 81, 110), wherein the at least two metallic layers (24, 54, 74, 94, 95, 144) constitute less than than 40% by weight of the laminate.

19. The laminate of Claim 1 (10, 40, 60, 80, 81, 110), wherein the at least two metallic layers (24, 54, 74, 94, 95, 144) constitute between 10% and 50% by volume of the laminate.

20. The laminate of Claim 1 (10, 40, 60, 80, 81, 110), wherein at a least a portion of the fibers (22, 51, 75) are aligned in a substantially same direction.

21. The laminate of Claim 20 (10, 40, 60, 80, 81, 110), wherein greater than 90% of the fibers (22, 51, 75) are aligned in the substantially same direction.

22. The laminate of Claim 20 (10, 40, 60, 80, 81, 110), wherein 100% of the fibers (22, 51, 75) are aligned in the substantially same direction.

23. The laminate of Claim 1 (10, 40, 60, 80, 81, 110), wherein at least a portion of the fibers (22, 51, 75) are aligned 45° to each other.

24. The laminate of Claim 1 (10, 40, 60, 80, 81, 110), wherein the at least a portion of the fibers (22, 51, 75) are aligned in a plurality of directions.

25. The laminate of Claim 1 (10, 40, 60, 80, 81, 110), wherein the fibers (22, 51, 75) include continuous fibers.

26. The laminate of Claim 1 (10, 40, 60, 80, 81, 110), wherein the at least two metallic layers (24, 54, 74, 94, 95, 144) include between 3 and 15 layers.

27. The laminate of Claim 1 (10, 40, 60, 80, 81, 110), wherein the at least one fiber layer (20, 50, 70, 71, 72, 93, 140) includes between 3 and 15 plies of fibers (22, 51, 75).

28. The laminate of Claim 1 (10, 40, 60, 80, 81, 110), wherein the at least two metallic layers (24, 54, 74, 94, 95, 144) each have a thickness between 1.02x10-4m (.004") and 6.35x10-4m (.025").

29. The laminate of Claim 1 (10, 40, 60, 80, 81, 110), wherein the at least two metallic layers (24, 54, 74, 94, 95, 144) receive a surface pretreatment.

30. The laminate of Claim 29 (10, 40, 60, 80, 81, 110), wherein the pretreatment includes phosporic acid anodizing.

31. The laminate of Claim 29 (10, 40, 60, 80, 81, 110), wherein the pretreatment includes coating the at least two metallic layers (24, 54, 74, 94, 95, 144) with an interphase layer.

32. The laminate of Claim 31 (10, 40, 60, 80, 81, 110), wherein the pretreatment includes a sol-gel surface preparation.

33. The laminate of Claim 2 (10, 40, 60, 80, 81, 110) wherein the at least one fiber layer (20, 50, 70, 71, 72, 93, 140) is bonded with an adhesive.

34. The laminate of Claim 33 (10, 40, 60, 80, 81, 110) wherein the adhesive includes an epoxy adhesive.

35. The laminate of Claim 1 (10, 40, 60, 80, 81, 110), further comprising at least one core layer (122, 152) disposed between the at least two metallic layers (24, 54, 74, 94, 95, 144).

36. The laminate of Claim 35 (10, 40, 60, 80, 81, 110), wherein the core layer (122, 152) includes a honeycomb core.

37. The laminate of Claim 36 (10, 40, 60, 80, 81, 110) wherein the honeycomb core includes a hexagonal honeycomb core.

38. A fiber-metal laminate of Claim 1 (10, 40, 60, 80, 81, 110), wherein:
the at least two metallic layers (24, 54, 74, 94, 95, 144) comprise at least two layers of aluminum alloy; and wherein
the at least one fiber layer (20, 50, 70, 71, 72, 93, 140) comprises at least one resin-fiber ply bonded between the at least two layers, the ply including a resin matrix and poly diimidazo pyridinylene fibers.

39. The laminate of Claim 38 (10, 40, 60, 80, 81, 110), wherein the poly diimidazo pyridinylene fibers include poly {2,6-diimidazo [4,5-b4',5'-e] pyridinylene-1,4(2,5-dihydroxy) phenylene} fibers.

40. The laminate of Claim 38 (10, 40, 60, 80, 81, 110), wherein the aluminum alloy includes a heat treatable aluminum alloy.

41. The laminate of Claim 40 (10, 40, 60, 80, 81, 110), wherein the aluminum alloy includes 2024 aluminum.

42. The laminate of Claim 40 (10, 40, 60, 80, 81, 110), wherein the aluminum alloy includes 7075 aluminum alloy.

43. The laminate of Claim 40 (10, 40, 60, 80, 81, 110), wherein the aluminum alloy includes 7055 aluminum alloy.

44. The laminate of Claim 40 (10, 40, 60, 80, 81, 110), wherein the aluminum alloy includes a Series 2000 aluminum alloy.

45. The laminate of Claim 40 (10, 40, 60, 80, 81, 110), wherein the aluminum alloy includes a Series 7000 aluminum alloy.

46. The laminate of Claim 40 (10, 40, 60, 80, 81, 110), wherein the aluminum alloy includes a Series 5000 aluminum alloy.

47. The laminate of Claim 40 (10, 40, 60, 80, 81, 110), wherein the aluminum alloy includes a Series 6000 aluminum alloy.

48. The laminate of Claim 38 (10, 40, 60, 80, 81, 110), wherein the at least one resin-fiber ply is bonded between the at least two layers with an adhesive.

49. The laminate of Claim 38 (10, 40, 60, 80, 81, 110), wherein the resin matrix includes an epoxy resin.

50. The laminate of Claim 38 (10, 40, 60, 80, 81, 110), wherein the resin matrix includes a thermohardening material.

51. The laminate of Claim 38 (10, 40, 60, 80, 81, 110), wherein the at least two metallic layers (24, 54, 74, 94, 95, 144) constitute less than 40% by weight of the laminate (10, 40, 60, 80, 81, 110).

52. The laminate of Claim 38 (10, 40, 60, 80, 81, 110), wherein the at least two metallic layers (24, 54, 74, 94, 95, 140) constitute between 10% and 50% by volume of the laminate (10, 40, 60, 80, 81, 110).

53. The laminate of Claim 38 (10, 40, 60, 80, 81, 110), wherein greater than 90% of the fibers (22, 51, 75) are aligned in a substantially same direction.

54. The laminate of Claim 53 (10, 40, 60, 80, 81, 110), wherein 100% of the fibers (22, 51, 75) are aligned in the substantially same direction.

55. The laminate of Claim 38 (10, 40, 60, 80, 81, 110), wherein at least a portion of the fibers (22, 51, 75) are aligned 45° to each other.

56. The laminate of Claim 38 (10, 40, 60, 80, 81, 110), wherein the at least a portion of the fibers (22, 51, 75) are aligned in a plurality of directions.

57. The laminate of Claim 38 (10, 40, 60, 80, 81, 110), wherein the at least two metallic layers (24, 54, 74, 94, 95, 144) include between 3 and 15 metallic layers.

58. The laminate of Claim 38 (10, 40, 60, 80, 81, 110), wherein the at least one fiber layer (20, 50, 70, 71, 72, 93, 140) includes between 3 and 15 reinforcing layers of polymer fibers.

59. The laminate of Claim 38 (10, 40, 60, 80, 81, 110), wherein the at least two metallic layers (24, 54, 74, 94, 95, 144) each have a thickness between 1.02x10-4m (.004") and 6.35x10-4m (.025").

60. The laminate of Claim 38 (10, 40, 60, 80, 81, 110), wherein the at least two metallic layers (24, 54, 74, 94, 95, 144) receive a surface pretreatment.

61. The laminate of Claim 60 (10, 40, 60, 80, 81, 110), wherein the pretreatment includes phosporic acid anodizing.

62. The laminate of Claim 60 (10, 40, 60, 80, 81, 110), wherein the pretreatment includes sol-gel surface preparation.

63. The laminate of Claim 60 (10, 40, 60, 80, 81, 110), wherein the pretreatment includes coating the at least two metallic layers (24, 54, 74, 94, 95, 144) with an interphase layer.

64. The laminate of Claim 38 (10, 40, 60, 80, 81, 110), further comprising at least one hollow core layer (122, 152) disposed between the at least two metallic layers (24, 54, 74, 94, 95, 144).

65. The laminate of Claim 64 (10, 40, 60, 80, 81, 110), wherein the hollow core layer (122, 152) includes a honeycomb core.

66. The laminate of Claim 65 (10, 40, 60, 80, 81, 110), wherein the honeycomb core includes a hexagonal honeycomb core.

67. A composite aircraft component, the component comprising:
a fiber-metal laminate of claim 1 (10, 40, 60, 80, 81, 110); wherein
the at least two metallic layers (24, 54, 74, 94, 95, 144) comprise at least two aluminum alloy foil layers each having a thickness in a range from 1.02x10-4m (0.004 inches) to 6.35x10-4m (0.025 inches); and
the at least one fiber layer (20, 50, 70, 71, 72, 93, 140) comprises at least one polymeric composite layer bonded between the at least two foil layers, the composite layer including a resin matrix and aligned poly diimidazo pyridinylene fibers.

68. The laminate of Claim 67 (10, 40, 60, 80, 81, 110), wherein the poly diimidazo pyridinylene fibers include poly {2,6-diimidazo [4,5-b4',5'-e] pyridinylene-1,4(2,5-dihydroxy) phenylene} fibers.

69. The laminate of Claim 67 (10, 40, 60, 80, 81, 110), wherein the aluminum alloy includes 2024 aluminum alloy.

70. The laminate of Claim 67 (10, 40, 60, 80, 81, 110), wherein the aluminum alloy includes 7075 aluminum alloy.

71. The laminate of Claim 67 (10, 40, 60, 80, 81, 110), wherein the aluminum alloy includes 7055 aluminum alloy.

72. The laminate of Claim 67 (10, 40, 60, 80, 81, 110), wherein the resin matrix includes an epoxy resin.

73. The laminate of Claim 67 (10, 40, 60, 80, 81, 110), wherein the at least two metallic layers (24, 54, 74, 94, 95, 144) constitute less than 40% by weight of the laminate (10, 40, 60, 80, 81, 110).

74. The laminate of Claim 67 (10, 40, 60, 80, 81, 110), wherein the at least two metallic layers (24, 54, 74, 94, 95, 144) constitute between 10% and 50% by volume of the laminate (10, 40, 60, 80, 81, 110).

75. The laminate of Claim 67 (10, 40, 60, 80, 81, 110), wherein greater than 90% of the fibers (22, 51, 75) are aligned in a substantially same direction.

76. The laminate of Claim 67 (10, 40, 60, 80, 81, 110), wherein 100% of the fibers (22, 51, 75) are aligned in the substantially same direction.

77. The laminate of Claim 67 (10, 40, 60, 80, 81, 110), wherein at least a portion of the fibers (22, 51, 75) are aligned 45° to each other.

78. The laminate of Claim 67 (10, 40, 60, 80, 81, 110), wherein the at least a portion of the fibers (22, 51, 75) are aligned in a plurality of directions.

79. The laminate of Claim 67 (10, 40, 60, 80, 81, 110), wherein the at least two metallic layers (24, 54, 74, 94, 95) include between 3 and 15 layers.

80. The laminate of Claim 67 (10, 40, 60, 80, 81, 110), wherein the at least one polymeric composite layer includes between 3 and 15 polymeric composite layers.

81. The laminate of Claim 67 (10, 40, 60, 80, 81, 110), wherein the at least two metallic layers (24, 54, 74, 94, 95) receive a surface pretreatment.

82. The laminate of Claim 81 (10, 40, 60, 80, 81, 110), wherein the pretreatment includes phosporic acid anodizing.

83. The laminate of Claim 81 (10, 40, 60, 80, 81, 110), wherein the pretreatment includes sol-gel surface preparation.

84. The laminate of Claim 67 (10, 40, 60, 80, 81, 110), further comprising at least one sol-gel interphase layer disposed between the at least two metallic layers (24, 54, 74, 94, 95, 144) and the at least one polymeric composite layer.

85. The laminate of Claim 67 (10, 40, 60, 80, 81, 110), further comprising at least one core layer (122, 152) disposed between the at least two metallic layers (24, 54, 74, 94, 95, 144).

86. The laminate of Claim 85 (10, 40, 60, 80, 81, 110), wherein the at least one core layer (122, 152) includes a honeycomb core.

87. A method for producing a fiber-metal laminate (10, 40, 60, 80, 81, 110), the method comprising:
providing a plurality of metallic layers (24, 54, 74, 94, 95, 144);
aligning a plurality of polymer fibers (22, 51, 75) having a modulus of elasticity of greater than 270 GPa into at least one fiber layer (20, 50, 70, 71, 72, 93, 140); and
sandwiching the at least one fiber layer (20, 50, 70, 71, 72, 93, 140) between the plurality of metallic layers (24, 54, 74, 94, 95, 144); **characterised in that**
the polymeric fibers include poly diimidazo pyridinylene fibers.

88. The method of Claim 87, further comprising bonding the at least one high modulus fiber layer (20, 50, 70, 71, 72, 93, 140) to the plurality of metallic layers (24, 54, 74, 94, 95, 144) adjoining the high modulus fiber layer (20, 50, 70, 71, 72, 93, 140).

89. The method of Claim 87, further comprising pretreating the plurality of metallic layers (24, 54, 74, 94, 95, 144).

90. The method of Claim 89, wherein pretreating includes pretreating with a sol-gel coating.

91. The method of Claim 87, wherein the poly diimidazo pyridinylene fibers include poly {2,6-diimidazo [4,5-b4',5'-e] pyridinylene-1,4(2,5-dihydroxy) phenylene} fibers.

92. The method of Claim 87, wherein the plurality of metallic layers (24, 54, 74, 94, 95, 144) include an aluminum alloy.

93. The method of Claim 87, wherein the plurality of metallic layers (24, 54, 74, 94, 95, 144) include a titanium alloy.

94. The method of Claim 87, wherein the plurality of metallic layers (24, 54, 74, 94, 95, 144) include a stainless steel alloy.

95. The method of Claim 87, wherein the resin matrix includes an epoxy resin.

96. The method of Claim 87, wherein the at least two metallic layers (24, 54, 74, 94, 95, 144) constitute less than 40% by weight of the laminate (10, 40, 60, 80, 81, 110).

97. The laminate of Claim 87, wherein the at least two metallic layers (24, 54, 74, 94, 95, 144) constitute between 10% and 50% by volume of the laminate (10, 40, 60, 80, 81, 110).

98. The method of Claim 87, further comprising forming a hollow core (122, 152) between the plurality of metallic foil layers (24, 54, 74, 94, 95, 144).

99. The method of Claim 98, wherein forming a hollow core (122, 152) includes forming a honeycomb core.

100. A fiber-metal laminate produced according to the method of claim 88.

101. The laminate of Claim 100, produced according to the method further comprising bonding the at least one high modulus fiber layer (20, 50, 70, 71, 72, 93, 140) to the plurality of metallic layers (24, 54, 74, 94, 95, 144) adjoining the high modulus fiber layer (20, 50, 70, 71, 72, 93, 140).

102. The laminate of Claim 100, produced according to the method further comprising pretreating the plurality of metallic layers (24, 54, 74, 94, 95, 144).

103. The method of Claim 102, wherein pretreating includes pretreating with a sol-gel coating.

## Patentansprüche

1. Faser-Metall-Laminat (10, 40, 60, 80, 81, 110), das aufweist:
zumindest zwei Metallschichten (24, 54, 74, 94, 95); und
zumindest eine Faserschicht (20, 50, 70, 71, 72, 93, 140), die zwischen den zumindest zwei Metallschichten (24, 54, 74, 94, 95, 144) angeordnet ist, wobei die zumindest eine Faserschicht (20, 50, 70, 71, 72, 93) eine Harzmatrix und organische Polymerfasern (22, 51, 75) mit einem Elastizitätsmodul über 270 GPa umfasst, **dadurch gekennzeichnet, dass**
die Polymerfasern (22, 75) Polydiimidazopyridinylenfasern umfassen.

2. Laminat nach Anspruch 1 (10, 40, 60, 80, 81, 110), wobei die zumindest eine Faserschicht (20, 50, 70, 71, 72, 93, 140) an die zumindest zwei Metallschichten (24, 54, 74, 94, 95, 144) gebunden ist.

3. Laminat nach Anspruch 1 (10, 40, 60, 80, 81, 110), wobei die Polymerfasern (22, 75) galvanisch nicht mit den Metallschichten (24, 54, 74, 94, 95, 144) reagieren.

4. Laminat nach Anspruch 1 (10, 40, 60, 80, 81, 110), wobei die Polydiimidazopyridinylenfasern Poly{2,6-diimidazo-[4,5-b4',5'-e]-pyridinylen-1,4-(2,5-dihydroxy)-phenylen}-fasern umfassen.

5. Laminat nach Anspruch 1 (10, 40, 60, 80, 81, 110), wobei die zumindest zwei Schichten (24, 54, 74, 94, 95, 144) eine Aluminiumlegierung umfassen.

6. Laminat nach Anspruch 1 (10, 40, 60, 80, 81, 110), wobei die Aluminiumlegierung eine wärmebehandelbare Aluminiumlegierung umfasst.

7. Laminat nach Anspruch 5 (10, 40, 60, 80, 81, 110), wobei die Aluminiumlegierung eine Aluminiumlegierung 2024 umfasst.

8. Laminat nach Anspruch 5 (10, 40, 60, 80, 81, 110), wobei die Aluminiumlegierung eine Aluminiumlegierung 7075 umfasst.

9. Laminat nach Anspruch 5 (10, 40, 60, 80, 81, 110), wobei die Aluminiumlegierung eine Aluminiumlegierung 7055 umfasst.

10. Laminat nach Anspruch 5 (10, 40, 60, 80, 81, 110), wobei die Aluminiumlegierung eine Aluminiumlegierung der Serien 2000 umfasst.

11. Laminat nach Anspruch 5 (10, 40, 60, 80, 81, 110), wobei die Aluminiumlegierung eine Aluminiumlegierung der Serien 7000 umfasst.

12. Laminat nach Anspruch 5 (10, 40, 60, 80, 81, 110), wobei die Aluminiumlegierung eine Aluminiumlegierung der Serien 5000 umfasst.

13. Laminat nach Anspruch 5 (10, 40, 60, 80, 81, 110), wobei die Aluminiumlegierung eine Aluminiumlegierung der Serien 6000 umfasst.

14. Laminat nach Anspruch 1 (10, 40, 60, 80, 81, 110), wobei die zumindest zwei Schichten (24, 54, 74, 94, 95, 144) eine Titanlegierung umfassen.

15. Laminat nach Anspruch 1 (10, 40, 60, 80, 81, 110), wobei die zumindest zwei Schichten (24, 54, 74, 94, 95, 144) eine Edelstahllegierung umfassen.

16. Laminat nach Anspruch 1 (10, 40, 60, 80, 81, 110), wobei die Harzmatrix ein Epoxidharz umfasst.

17. Laminat nach Anspruch 1 (10, 40, 60, 80, 81, 110), wobei die Harzmatrix ein wärmehärtendes Material umfasst.

18. Laminat nach Anspruch 1 (10, 40, 60, 80, 81, 110), wobei die zumindest zwei Metallschichten (24, 54, 74, 94, 95, 144) weniger als 40 Gew.-% des Laminats ausmachen.

19. Laminat nach Anspruch 1 (10, 40, 60, 80, 81, 110), wobei die zumindest zwei Metallschichten (24, 54, 74, 94, 95, 144) zwischen 10 und 50 Vol.-% des Laminats ausmachen.

20. Laminat nach Anspruch 1 (10, 40, 60, 80, 81, 110), wobei zumindest ein Teil der Fasern (22, 51, 75) im Wesentlichen in der gleichen Richtung ausgerichtet ist.

21. Laminat nach Anspruch 20 (10, 40, 60, 80, 81, 110), wobei mehr als 90 % der Fasern (22, 51, 75) im Wesentlichen in der gleichen Richtung ausgerichtet ist.

22. Laminat nach Anspruch 20 (10, 40, 60, 80, 81, 110), wobei 100 % der Fasern (22, 51, 75) im Wesentlichen in der gleichen Richtung ausgerichtet sind.

23. Laminat nach Anspruch 1 (10, 40, 60, 80, 81, 110), wobei zumindest ein Teil der Fasern (22, 51, 75) in einem Winkel von 45° zueinander ausgerichtet ist.

24. Laminat nach Anspruch 1 (10, 40, 60, 80, 81, 110), wobei zumindest ein Teil der Fasern (22, 51, 75) in mehreren Richtungen ausgerichtet ist.

25. Laminat nach Anspruch 1 (10, 40, 60, 80, 81, 110), wobei die Fasern (22, 51, 75) kontinuierliche Fasern umfassen.

26. Laminat nach Anspruch 1 (10, 40, 60, 80, 81, 110), wobei die zumindest zwei Metallschichten (24, 54, 74, 94, 95, 144) zwischen 3 und 15 Schichten umfassen.

27. Laminat nach Anspruch 1 (10, 40, 60, 80, 81, 110), wobei die zumindest eine Faserschicht (20, 50, 70, 71, 72, 93, 140) zwischen 3 und 15 Faserlagen umfasst.

28. Laminat nach Anspruch 1 (10, 40, 60, 80, 81, 110), wobei die zumindest zwei Metallschichten (24, 54, 74, 94, 95, 144) jeweils eine Dicke zwischen 1,02x10⁻⁴m (0,004 Zoll) und 6,35x10⁻⁴m (0,025 Zoll) aufweisen.

29. Laminat nach Anspruch 1 (10, 40, 60, 80, 81, 110), wobei die zumindest zwei Metallschichten (24, 54, 74, 94, 95, 144) eine Oberflächenvorbehandlung erhalten.

30. Laminat nach Anspruch 29 (10, 40, 60, 80, 81, 110), wobei die Vorbehandlung eine Phosphorsäure-Anodisierung umfasst.

31. Laminat nach Anspruch 29 (10, 40, 60, 80, 81, 110), wobei die Vorbehandlung umfasst, die zumindest zwei Metallschichten (24, 54, 74, 94, 95, 144) mit einer Zwischenphasenschicht vorzubehandeln.

32. Laminat nach Anspruch 31 (10, 40, 60, 80, 81, 110), wobei die Vorbehandlung eine Sol-Gel-Oberflächenbehandlung umfasst.

33. Laminat nach Anspruch 2 (10, 40, 60, 80, 81, 110), wobei die zumindest eine Faserschicht (20, 50, 70, 71, 72, 93, 140) mittels eines Klebstoffs verbunden ist.

34. Laminat nach Anspruch 33 (10, 40, 60, 80, 81, 110), wobei der Klebstoff einen Epoxidklebstoff umfasst.

35. Laminat nach Anspruch 1 (10, 40, 60, 80, 81, 110), das ferner zumindest eine Kernschicht (122, 152) aufweist, die zwischen den zumindest zwei Metallschichten (24, 54, 74, 94, 95, 144) angeordnet ist.

36. Laminat nach Anspruch 35 (10, 40, 60, 80, 81, 110), wobei die Kernschicht (122, 152) einen Wabenkern aufweist.

37. Laminat nach Anspruch 36 (10, 40, 60, 80, 81, 110), wobei der Wabenkern einen hexagonalen Wabenkern umfasst.

38. Faser-Metall-Laminat nach Anspruch 1 (10, 40, 60, 80, 81, 110), wobei:
die zumindest zwei Metallschichten (24, 54, 74, 94, 95, 144) zumindest zwei Schichten aus einer Aluminiumlegierung umfassen; und wobei
die zumindest eine Faserschicht (20, 50, 70, 71, 72, 93, 140) zumindest eine Harz-Faser-Lage umfasst, die zwischen den zumindest zwei Schichten verbunden ist, wobei die Lage eine Harzmatrix und Polydiimidazopyridinylenfasern umfasst.

39. Laminat nach Anspruch 38 (10, 40, 60, 80, 81, 110), wobei die Polydiimidazopyridinylenfasern Poly{2,6-dümidazo-[4,5-b4',5'-e]-pyridinylen-1,4-(2,5-dihydroxy)-phenylen}-fasern umfassen.

40. Laminat nach Anspruch 38 (10, 40, 60, 80, 81, 110), wobei die Aluminiumlegierung eine wärmebehandelbare Aluminiumlegierung umfasst.

41. Laminat nach Anspruch 40 (10, 40, 60, 80, 81, 110), wobei die Aluminiumlegierung eine Aluminiumlegierung 2024 umfasst.

42. Laminat nach Anspruch 40 (10, 40, 60, 80, 81, 110), wobei die Aluminiumlegierung eine Aluminiumlegierung 7075 umfasst.

43. Laminat nach Anspruch 40 (10, 40, 60, 80, 81, 110), wobei die Aluminiumlegierung eine Aluminiumlegierung 7055 umfasst.

44. Laminat nach Anspruch 40 (10, 40, 60, 80, 81, 110), wobei die Aluminiumlegierung eine Aluminiumlegierung der Serien 2000 umfasst.

45. Laminat nach Anspruch 40 (10, 40, 60, 80, 81, 110), wobei die Aluminiumlegierung eine Aluminiumlegierung der Serien 7000 umfasst.

46. Laminat nach Anspruch 40 (10, 40, 60, 80, 81, 110), wobei die Aluminiumlegierung eine Aluminiumlegierung der Serien 5000 umfasst.

47. Laminat nach Anspruch 40 (10, 40, 60, 80, 81, 110), wobei die Aluminiumlegierung eine Aluminiumlegierung der Serien 6000 umfasst.

48. Laminat nach Anspruch 38 (10, 40, 60, 80, 81, 110), wobei die zumindest eine Harz-Faser-Lage zwischen den zumindest zwei Lagen mit einem Klebstoff verbunden ist.

49. Laminat nach Anspruch 38 (10, 40, 60, 80, 81, 110), wobei die Harzmatrix ein Epoxidharz umfasst.

50. Laminat nach Anspruch 38 (10, 40, 60, 80, 81, 110), wobei die Harzmatrix ein wärmehärtendes Material umfasst.

51. Laminat nach Anspruch 38 (10, 40, 60, 80, 81, 110), wobei die zumindest zwei Metallschichten (24, 54, 74, 94, 95, 144) weniger als 40 Gew.-% des Laminats ausmachen.

52. Laminat nach Anspruch 38 (10, 40, 60, 80, 81, 110), wobei die zumindest zwei Metallschichten (24, 54, 74, 94, 95, 144) zwischen 10 und 50 Vol.-% des Laminats ausmachen.

53. Laminat nach Anspruch 38 (10, 40, 60, 80, 81, 110), wobei mehr als 90 % der Fasern (22, 51, 75) im Wesentlichen in der gleichen Richtung ausgerichtet sind.

54. Laminat nach Anspruch 53 (10, 40, 60, 80, 81, 110), wobei 100 % der Fasern (22, 51, 75) im Wesentlichen in der gleichen Richtung ausgerichtet sind.

55. Laminat nach Anspruch 38 (10, 40, 60, 80, 81, 110), wobei zumindest ein Teil der Fasern (22, 51, 75) in einem Winkel von 45° zueinander ausgerichtet ist.

56. Laminat nach Anspruch 38 (10, 40, 60, 80, 81, 110), wobei zumindest ein Teil der Fasern (22, 51, 75) in mehreren Richtungen ausgerichtet ist.

57. Laminat nach Anspruch 38 (10, 40, 60, 80, 81, 110), wobei die zumindest zwei Metallschichten (24, 54, 74, 94, 95, 144) zwischen 3 und 15 Metallschichten umfassen.

58. Laminat nach Anspruch 38 (10, 40, 60, 80, 81, 110), wobei die zumindest eine Faserschicht (20, 50, 70, 71, 72, 93, 140) zwischen 3 und 15 Verstärkungsschichten aus Polymerfasern umfasst.

59. Laminat nach Anspruch 38 (10, 40, 60, 80, 81, 110), wobei die zumindest zwei Metallschichten (24, 54, 74, 94, 95, 144) jeweils eine Dicke zwischen 1,02x10⁻⁴m (0,004 Zoll) und 6,35x10⁻⁴m (0,025 Zoll) aufweisen.

60. Laminat nach Anspruch 38 (10, 40, 60, 80, 81, 110), wobei die zumindest zwei Metallschichten (24, 54, 74, 94, 95, 144) eine Oberflächenvorbehandlung erhalten.

61. Laminat nach Anspruch 60 (10, 40, 60, 80, 81, 110), wobei die Vorbehandlung eine Phosphorsäure-Anodisierung umfasst.

62. Laminat nach Anspruch 60 (10, 40, 60, 80, 81, 110), wobei die Vorbehandlung eine Sol-Gel-Oberflächenbehandlung umfasst.

63. Laminat nach Anspruch 60 (10, 40, 60, 80, 81, 110), wobei die Vorbehandlung umfasst, die zumindest zwei Metallschichten (24, 54, 74, 94, 95, 144) mit einer Zwischenphasenschicht vorzubehandeln.

64. Laminat nach Anspruch 38 (10, 40, 60, 80, 81, 110), das ferner zumindest eine Hohlkernschicht aufweist, die zwischen den zumindest zwei Metallschichten (24, 54, 74, 94, 95, 144) angeordnet ist.

65. Laminat nach Anspruch 64 (10, 40, 60, 80, 81, 110), wobei die Hohlkernschicht (122, 152) einen Wabenkern aufweist.

66. Laminat nach Anspruch 65 (10, 40, 60, 80, 81, 110), wobei der Wabenkern einen hexagonalen Wabenkern umfasst.

67. Luftfahrzeugverbundmaterialkomponente, wobei die Komponente aufweist:
ein Faser-Metall-Laminat nach Anspruch 1(10, 40, 60, 80, 81, 110), wobei
die zumindest zwei Metallschichten (24, 54, 74, 94, 95, 144) zumindest zwei Folienschichten einer Aluminiumlegierung umfassen, die jeweils eine Dicke im Bereich von 1,02x10⁻⁴m (0,004 Zoll) und 6,35x10⁻⁴m (0,025 Zoll) aufweisen, und
die zumindest eine Faserschicht (20, 50, 70, 71, 72, 93, 140) zumindest eine polymere Verbundmateriallage aufweist, die zwischen den zumindest zwei Folienschichten verbunden ist, wobei die Verbundmaterialschicht eine Harzmatrix und ausgerichtete Polydiimidazopyridinylenfasern umfasst.

68. Laminat nach Anspruch 67 (10, 40, 60, 80, 81, 110), wobei die Polydiimidazopyridinylenfasern Poly{2,6-diimidazo-[4,5-b4',5'-e]-pyridinylen-1,4-(2,5-dihydroxy)-phenylen}-fasern umfassen.

69. Laminat nach Anspruch 67 (10, 40, 60, 80, 81, 110), wobei die Aluminiumlegierung eine Aluminiumlegierung 2024 umfasst.

70. Laminat nach Anspruch 67 (10, 40, 60, 80, 81, 110), wobei die Aluminiumlegierung eine Aluminiumlegierung 7075 umfasst.

71. Laminat nach Anspruch 67 (10, 40, 60, 80, 81, 110), wobei die Aluminiumlegierung eine Aluminiumlegierung 7055 umfasst.

72. Laminat nach Anspruch 67 (10, 40, 60, 80, 81, 110), wobei die Harzmatrix ein Epoxidharz umfasst.

73. Laminat nach Anspruch 67 (10, 40, 60, 80, 81, 110), wobei die zumindest zwei Metallschichten (24, 54, 74, 94, 95, 144) weniger als 40 Gew.-% des Laminats (10, 40, 60, 80, 81, 110) ausmachen.

74. Laminat nach Anspruch 67 (10, 40, 60, 80, 81, 110), wobei die zumindest zwei Metallschichten (24, 54, 74, 94, 95, 144) zwischen 10 und 50 Vol.-% des Laminats (10, 40, 60, 80, 81, 110) ausmachen.

75. Laminat nach Anspruch 67 (10, 40, 60, 80, 81, 110), wobei mehr als 90 % der Fasern (22, 51, 75) im Wesentlichen in der gleichen Richtung ausgerichtet sind.

76. Laminat nach Anspruch 67 (10, 40, 60, 80, 81, 110), wobei 100 % der Fasern (22, 51, 75) im Wesentlichen in der gleichen Richtung ausgerichtet sind.

77. Laminat nach Anspruch 67 (10, 40, 60, 80, 81, 110), wobei zumindest ein Teil der Fasern (22, 51, 75) in einem Winkel von 45° zueinander ausgerichtet ist.

78. Laminat nach Anspruch 67 (10, 40, 60, 80, 81, 110), wobei zumindest ein Teil der Fasern (22, 51, 75) in mehreren Richtungen ausgerichtet ist.

79. Laminat nach Anspruch 67 (10, 40, 60, 80, 81, 110), wobei die zumindest zwei Metallschichten (24, 54, 74, 94, 95) zwischen 3 und 15 Schichten umfassen.

80. Laminat nach Anspruch 67 (10, 40, 60, 80, 81, 110), wobei die zumindest eine polymere Verbundmaterialschicht zwischen 3 und 15 polymere Verbundmaterialschichten umfasst.

81. Laminat nach Anspruch 67 (10, 40, 60, 80, 81, 110), wobei die zumindest zwei Metallschichten (24, 54, 74, 94, 95) eine Oberflächenvorbehandlung erhalten.

82. Laminat nach Anspruch 81 (10, 40, 60, 80, 81, 110), wobei die Vorbehandlung eine Phosphorsäure-Anodisierung umfasst.

83. Laminat nach Anspruch 81 (10, 40, 60, 80, 81, 110), wobei die Vorbehandlung eine Sol-Gel-Oberflächenbehandlung umfasst.

84. Laminat nach Anspruch 67 (10, 40, 60, 80, 81, 110), das ferner zumindest eine Sol-Gel-Zwischenphasenschicht aufweist, die zwischen den zumindest zwei Metallschichten (24, 54, 74, 94, 95, 144) und der zumindest einen polymeren Verbundmaterialschicht angeordnet ist.

85. Laminat nach Anspruch 67 (10, 40, 60, 80, 81, 110), das ferner zumindest eine Kernschicht (122, 152) aufweist, die zwischen den zumindest zwei Metallschichten (24, 54, 74, 94, 95, 144) angeordnet ist.

86. Laminat nach Anspruch 85 (10, 40, 60, 80, 81, 110), wobei die zumindest eine Kernschicht (122, 152) einen Wabenkern aufweist.

87. Verfahren zur Herstellung eines Faser-Metall-Laminats (10, 40, 60, 80, 81, 110), wobei das Verfahren umfasst:
Bereitstellen von mehreren Metallschichten (24, 54, 74, 94, 95, 144);
Ausrichten von mehreren Polymerfasern (22, 51, 75), die ein Elastizitätsmodul von mehr als 270 GPa aufweisen, in zumindest einer Faserschicht (20, 50, 70, 71, 72, 93, 140); und
Einfassen der zumindest einen Faserschicht (20, 50, 70, 71, 72, 93, 140) zwischen den mehreren Metallschichten (24, 54, 74, 94, 95, 144); **dadurch gekennzeichnet, dass**
die Polymerfasern Polydiimidazopyridinylenfasern umfassen.

88. Verfahren nach Anspruch 87, das ferner umfasst, die zumindest eine Faserschicht (20, 50, 70, 71, 72, 93, 140) mit hohem Modul mit den mehreren Metallschichten (24, 54, 74, 94, 95, 144) zu verbinden, die an die Faserschicht (20, 50, 70, 71, 72, 93, 140) mit hohem Modul angrenzen.

89. Verfahren nach Anspruch 87, das ferner umfasst, die mehreren Metallschichten (24, 54, 74, 94, 95, 144) vorzubehandeln.

90. Verfahren nach Anspruch 89, wobei die Vorbehandlung eine Sol-Gel-Vorbehandlung umfasst.

91. Verfahren nach Anspruch 87, wobei die Polydiimidazopyridinylenfasern Poly{2,6-diimidazo-[4,5-b4',5'-e]-pyridinylen-1,4-(2,5-dihydroxy)-phenylen}-fasern umfassen.

92. Verfahren nach Anspruch 87, wobei die mehreren Metallschichten (24, 54, 74, 94, 95, 144) eine Aluminiumlegierung umfassen.

93. Verfahren nach Anspruch 87, wobei die mehreren Metallschichten (24, 54, 74, 94, 95, 144) eine Titanlegierung umfassen.

94. Verfahren nach Anspruch 87, wobei die mehreren Metallschichten (24, 54, 74, 94, 95, 144) eine Edelstahllegierung umfassen.

95. Verfahren nach Anspruch 87, wobei die Harzmatrix ein Epoxidharz umfasst.

96. Verfahren nach Anspruch 87, wobei die zumindest zwei Metallschichten (24, 54, 74, 94, 95, 144) weniger als 40 Gew.-% des Laminats ausmachen.

97. Verfahren nach Anspruch 87, wobei die zumindest zwei Metallschichten (24, 54, 74, 94, 95, 144) zwischen 10 und 50 Vol.-% des Laminats (10, 40, 60, 80, 81, 110) ausmachen.

98. Verfahren nach Anspruch 87, das ferner umfasst, einen Hohlkern (122, 152) zwischen den zumindest zwei Metallschichten (24, 54, 74, 94, 95, 144) auszubilden.

99. Verfahren nach Anspruch 98, wobei das Ausbilden eines Hohlkerns (122, 152) ein Ausbilden eines Wabenkerns umfasst.

100. Faser-Metall-Laminat, das gemäß dem Verfahren nach Anspruch 88 hergestellt wurde.

101. Laminat nach Anspruch 100, das nach einem Verfahren hergestellt wurde, das ferner umfasst, die zumindest eine Faserschicht (20, 50, 70, 71, 72, 93, 140) mit hohem Modul mit den mehreren Metallschichten (24, 54, 74, 94, 95, 144) zu verbinden, die an die Faserschicht (20, 50, 70, 71, 72, 93, 140) mit hohem Modul angrenzen.

102. Laminat nach Anspruch 100, das nach einem Verfahren hergestellt wurde, das ferner umfasst, die mehreren Metallschichten (24, 54, 74, 94, 95, 144) vorzubehandeln.

103. Verfahren nach Anspruch 102, wobei die Vorbehandlung eine Sol-Gel-Beschichtung umfasst.

## Revendications

1. Stratifié fibres-métal (10, 40, 60, 80, 81, 110) comprenant :
au moins deux couches métalliques (24, 54, 74, 94, 95) ; et
au moins une couche de fibres (20, 50, 70, 71, 72, 93, 140) disposée entre lesdites au moins deux couches métalliques (24, 54, 74, 94, 95, 144), ladite au moins une couche de fibres (20, 50, 70, 71, 72, 93) comprenant une matrice de résine et des fibres polymères organiques (22, 51, 75) ayant un module d'élasticité supérieur à 270 GPa ; **caractérisé en ce que**
les fibres polymères (22, 75) comprennent des fibres de polydiimidazopyridinylène.

2. Stratifié selon la revendication 1 (10, 40, 60, 80, 81, 110), dans lequel ladite au moins une couche de fibres (20, 50, 70, 71, 72, 93, 140) est liée auxdites au moins deux couches métalliques (24, 54, 74, 94, 95, 144).

3. Stratifié selon la revendication 1 (10, 40, 60, 80, 81, 110), dans lequel lesdites fibres polymères (22, 75) ne sont pas réactives de manière galvanique avec les couches métalliques (24, 54, 74, 94, 95, 144).

4. Stratifié selon la revendication 1 (10, 40, 60, 80, 81, 110), dans lequel les fibres de polydiimidazopyridinylène comprennent les fibres de poly{2,6-diimidazo[4,5-b4',5'-e]pyridinylène-1,4(2,5-dihydroxy)phénylène}.

5. Stratifié selon la revendication 1 (10, 40, 60, 80, 81, 110), dans lequel lesdites au moins deux couches métalliques (24, 54, 74, 94, 95, 144) comprennent un alliage d'aluminium.

6. Stratifié selon la revendication 1 (10, 40, 60, 80, 81, 110), dans lequel l'alliage d'aluminium comprend un alliage d'aluminium pouvant être traité thermiquement.

7. Stratifié selon la revendication 5 (10, 40, 60, 80, 81, 110), dans lequel l'alliage d'aluminium comprend l'alliage d'aluminium 2024.

8. Stratifié selon la revendication 5 (10, 40, 60, 80, 81, 110), dans lequel l'alliage d'aluminium comprend l'alliage d'aluminium 7075.

9. Stratifié selon la revendication 5 (10, 40, 60, 80, 81, 110), dans lequel l'alliage d'aluminium comprend l'alliage d'aluminium 7055.

10. Stratifié selon la revendication 5 (10, 40, 60, 80, 81, 110), dans lequel l'alliage d'aluminium comprend un alliage d'aluminium de la série 2000.

11. Stratifié selon la revendication 5 (10, 40, 60, 80, 81, 110), dans lequel l'alliage d'aluminium comprend un alliage d'aluminium de la série 7000.

12. Stratifié selon la revendication 5 (10, 40, 60, 80, 81, 110), dans lequel l'alliage d'aluminium comprend un alliage d'aluminium de la série 5000.

13. Stratifié selon la revendication 5 (10, 40, 60, 80, 81, 110), dans lequel l'alliage d'aluminium comprend un alliage d'aluminium de la série 6000.

14. Stratifié selon la revendication 1 (10, 40, 60, 80, 81, 110), dans lequel lesdites au moins deux couches métalliques (24, 54, 74, 94, 95, 144) comprennent un alliage de titane.

15. Stratifié selon la revendication 1 (10, 40, 60, 80, 81, 110), dans lequel lesdites au moins deux couches métalliques (24, 54, 74, 94, 95, 144) comprennent un alliage d'acier inoxydable.

16. Stratifié selon la revendication 1 (10, 40, 60, 80, 81, 110), dans lequel la matrice de résine comprend une résine époxy.

17. Stratifié selon la revendication 1 (10, 40, 60, 80, 81, 110), dans lequel la matrice de résine comprend un matériau thermodurcissant.

18. Stratifié selon la revendication 1 (10, 40, 60, 80, 81, 110), dans lequel lesdites au moins deux couches métalliques (24, 54, 74, 94, 95, 144) constituent moins de 40 % en poids du stratifié.

19. Stratifié selon la revendication 1 (10, 40, 60, 80, 81, 110), dans lequel lesdites au moins deux couches métalliques (24, 54, 74, 94, 95, 144) constituent entre 10 % et 50 % en volume du stratifié.

20. Stratifié selon la revendication 1 (10, 40, 60, 80, 81, 110), dans lequel au moins une partie des fibres (22, 51, 75) est alignée dans sensiblement une même direction.

21. Stratifié selon la revendication 20 (10, 40, 60, 80, 81, 110), dans lequel plus de 90 % des fibres (22, 51, 75) sont alignées dans sensiblement la même direction.

22. Stratifié selon la revendication 20 (10, 40, 60, 80, 81, 110), dans lequel 100 % des fibres (22, 51, 75) sont alignées dans sensiblement la même direction.

23. Stratifié selon la revendication 1 (10, 40, 60, 80, 81, 110), dans lequel au moins une partie des fibres (22, 51, 75) est alignée à 45° les unes des autres.

24. Stratifié selon la revendication 1 (10, 40, 60, 80, 81, 110), dans lequel ladite au moins une partie des fibres (22, 51, 75) est alignée dans une pluralité de directions.

25. Stratifié selon la revendication 1 (10, 40, 60, 80, 81, 110), dans lequel les fibres (22, 51, 75) comprennent des fibres continues.

26. Stratifié selon la revendication 1 (10, 40, 60, 80, 81, 110), dans lequel lesdites au moins deux couches métalliques (24, 54, 74, 94, 95, 144) comprennent entre 3 et 15 couches.

27. Stratifié selon la revendication 1 (10, 40, 60, 80, 81, 110), dans lequel ladite au moins une couche de fibres (20, 50, 70, 71, 72, 93, 140) comprend entre 3 et 15 feuilles de fibres (22, 51, 75).

28. Stratifié selon la revendication 1 (10, 40, 60, 80, 81, 110), dans lequel lesdites au moins deux couches métalliques (24, 54, 74, 94, 95, 144) ont chacune une épaisseur comprise entre 1,02x10-4 m (0,004 pouce) et 6,35 x10-4 m (0,025 pouce).

29. Stratifié selon la revendication 1 (10, 40, 60, 80, 81, 110), dans lequel lesdites au moins deux couches métalliques (24, 54, 74, 94, 95, 144) reçoivent un prétraitement superficiel.

30. Stratifié selon la revendication 29 (10, 40, 60, 80, 81, 110), dans lequel le prétraitement comprend l'anodisation à l'acide phosphorique.

31. Stratifié selon la revendication 29 (10, 40, 60, 80, 81, 110), dans lequel le prétraitement comprend le revêtement desdites au moins deux couches métalliques (24, 54, 74, 94, 95, 144) avec une couche d'interphase.

32. Stratifié selon la revendication 31 (10, 40, 60, 80, 81, 110), dans lequel le prétraitement comprend une préparation de surface sol-gel.

33. Stratifié selon la revendication 2 (10, 40, 60, 80, 81, 110), dans lequel ladite au moins une couche de fibres (20, 50, 70, 71, 72, 93, 140) est liée avec un adhésif.

34. Stratifié selon la revendication 33 (10, 40, 60, 80, 81, 110), dans lequel l'adhésif comprend un adhésif époxy.

35. Stratifié selon la revendication 1 (10, 40, 60, 80, 81, 110), comprenant en outre au moins une couche centrale (122, 152) disposée entre lesdites au moins deux couches métalliques (24, 54, 74, 94, 95, 144).

36. Stratifié selon la revendication 35 (10, 40, 60, 80, 81, 110), dans lequel la couche centrale (122, 152) comprend un coeur en nid d'abeille.

37. Stratifié selon la revendication 36 (10, 40, 60, 80, 81, 110), dans lequel le coeur en nid d'abeille comprend un coeur en nid d'abeille hexagonal.

38. Stratifié fibres-métal selon la revendication 1 (10, 40, 60, 80, 81, 110), dans lequel :
lesdites au moins deux couches métalliques (24, 54, 74, 94, 95, 144) comprennent au moins deux couches d'alliage d'aluminium ; et dans lequel
ladite au moins une couche de fibres (20, 50, 70, 71, 72, 93, 140) comprend au moins une feuille de fibres-résine entre lesdites au moins deux couches, la feuille comprenant une matrice de résine et des fibres de polydiimidazopyridinylène.

39. Stratifié selon la revendication 38 (10, 40, 60, 80, 81, 110), dans lequel les fibres de polydiimidazopyridinylène comprennent les fibres de poly{2,6-diimidazo[4,5-b4',5'-e]pyridinylène-1,4(2,5-dihydroxy)phénylène}.

40. Stratifié selon la revendication 38 (10, 40, 60, 80, 81, 110), dans lequel l'alliage d'aluminium comprend un alliage d'aluminium pouvant être traité thermiquement.

41. Stratifié selon la revendication 40 (10, 40, 60, 80, 81, 110), dans lequel l'alliage d'aluminium comprend l'alliage d'aluminium 2024.

42. Stratifié selon la revendication 40 (10, 40, 60, 80, 81, 110), dans lequel l'alliage d'aluminium comprend l'alliage d'aluminium 7075.

43. Stratifié selon la revendication 40 (10, 40, 60, 80, 81, 110), dans lequel l'alliage d'aluminium comprend l'alliage d'aluminium 7055.

44. Stratifié selon la revendication 40 (10, 40, 60, 80, 81, 110), dans lequel l'alliage d'aluminium comprend un alliage d'aluminium de la série 2000.

45. Stratifié selon la revendication 40 (10, 40, 60, 80, 81, 110), dans lequel l'alliage d'aluminium comprend un alliage d'aluminium de la série 7000.

46. Stratifié selon la revendication 40 (10, 40, 60, 80, 81, 110), dans lequel l'alliage d'aluminium comprend un alliage d'aluminium de la série 5000.

47. Stratifié selon la revendication 40 (10, 40, 60, 80, 81, 110), dans lequel l'alliage d'aluminium comprend un alliage d'aluminium de la série 6000.

48. Stratifié selon la revendication 38 (10, 40, 60, 80, 81, 110), dans lequel ladite au moins une feuille de fibres-résine est liée entre lesdites au moins deux couches avec un adhésif.

49. Stratifié selon la revendication 38 (10, 40, 60, 80, 81, 110), dans lequel la matrice de résine comprend une matrice époxy.

50. Stratifié selon la revendication 38 (10, 40, 60, 80, 81, 110), dans lequel la matrice de résine comprend un matériau thermodurcissable.

51. Stratifié selon la revendication 38 (10, 40, 60, 80, 81, 110), dans lequel lesdites au moins deux couches métalliques (24, 54, 74, 94, 95, 144) constituent moins de 40 % en poids du stratifié (10, 40, 60, 80, 81, 110).

52. Stratifié selon la revendication 38 (10, 40, 60, 80, 81, 110), dans lequel lesdites au moins deux couches métalliques (24, 54, 74, 94, 95, 144) constituent entre 10 % et 50 % en volume du stratifié (10, 40, 60, 80, 81, 110).

53. Stratifié selon la revendication 38 (10, 40, 60, 80, 81, 110), dans lequel plus de 90 % des fibres (22, 51, 75) sont alignées dans sensiblement la même direction.

54. Stratifié selon la revendication 53 (10, 40, 60, 80, 81, 110), dans lequel 100 % des fibres (22, 51, 75) sont alignées dans sensiblement la même direction.

55. Stratifié selon la revendication 38 (10, 40, 60, 80, 81, 110), dans lequel au moins une partie des fibres (22, 51, 75) est alignée à 45° les unes des autres.

56. Stratifié selon la revendication 38 (10, 40, 60, 80, 81, 110), dans lequel ladite au moins une partie des fibres (22, 51, 75) est alignée dans une pluralité de directions.

57. Stratifié selon la revendication 38 (10, 40, 60, 80, 81, 110), dans lequel lesdites au moins deux couches métalliques (24, 54, 74, 94, 95, 144) comprennent entre 3 et 15 couches métalliques.

58. Stratifié selon la revendication 38 (10, 40, 60, 80, 81, 110), dans lequel ladite au moins une couche de fibres (20, 50, 70, 71, 72, 93, 140) comprend entre 3 et 15 couches de renforcement de fibres polymères.

59. Stratifié selon la revendication 38 (10, 40, 60, 80, 81, 110), dans lequel lesdites au moins deux couches métalliques (24, 54, 74, 94, 95, 144) ont chacune une épaisseur comprise entre 1,02x10-4 m (0,004 pouce) et 6,35 x10-4 m (0,025 pouce).

60. Stratifié selon la revendication 38 (10, 40, 60, 80, 81, 110), dans lequel lesdites au moins deux couches métalliques (24, 54, 74, 94, 95, 144) reçoivent un prétraitement superficiel.

61. Stratifié selon la revendication 60 (10, 40, 60, 80, 81, 110), dans lequel le prétraitement comprend l'anodisation à l'acide phosphorique.

62. Stratifié selon la revendication 60 (10, 40, 60, 80, 81, 110), dans lequel le prétraitement comprend une préparation de surface sol-gel.

63. Stratifié selon la revendication 60 (10, 40, 60, 80, 81, 110), dans lequel le prétraitement comprend le revêtement desdites au moins deux couches métalliques (24, 54, 74, 94, 95, 144) avec une couche d'interphase.

64. Stratifié selon la revendication 38 (10, 40, 60, 80, 81, 110), comprenant en outre au moins une couche centrale creuse (122, 152) disposée entre lesdites au moins deux couches métalliques (24, 54, 74, 94, 95, 144).

65. Stratifié selon la revendication 64 (10, 40, 60, 80, 81, 110), dans lequel la couche centrale creuse (122, 152) comprend un coeur en nid d'abeille.

66. Stratifié selon la revendication 65 (10, 40, 60, 80, 81, 110), dans lequel le coeur en nid d'abeille comprend un coeur en nid d'abeille hexagonal.

67. Composant d'avion composite, le composant comprenant :
un stratifié fibres-métal selon la revendication 1 (10, 40, 60, 80, 81, 110) ;
dans lequel lesdites au moins deux couches métalliques (24, 54, 74, 94, 95, 144) comprennent au moins deux couches de feuille d'alliage d'aluminium, chacune ayant une épaisseur comprise entre 1,02x10-4 m (0,004 pouce) et 6,35 x10-4 m (0,025 pouce) ; et
ladite au moins une couche de fibres (20, 50, 70, 71, 72, 93, 140) comprend au moins une couche de composite polymère liée entre lesdites au moins deux couches de feuille, la couche de composite comprenant une matrice de résine et des fibres de polydiimidazopyridinylène alignées.

68. Stratifié selon la revendication 67 (10, 40, 60, 80, 81, 110), dans lequel les fibres de polydiimidazopyridinylène comprennent les fibres de poly{2,6-diimidazo[4,5-b4',5'-e]pyridinylène-1,4(2,5-dihydroxy)phénylène}.

69. Stratifié selon la revendication 67 (10, 40, 60, 80, 81, 110), dans lequel l'alliage d'aluminium comprend l'alliage d'aluminium 2024.

70. Stratifié selon la revendication 67 (10, 40, 60, 80, 81, 110), dans lequel l'alliage d'aluminium comprend l'alliage d'aluminium 7075.

71. Stratifié selon la revendication 67 (10, 40, 60, 80, 81, 110), dans lequel l'alliage d'aluminium comprend l'alliage d'aluminium 7055.

72. Stratifié selon la revendication 67 (10, 40, 60, 80, 81, 110), dans lequel la matrice de résine comprend une résine époxy.

73. Stratifié selon la revendication 67 (10, 40, 60, 80, 81, 110), dans lequel lesdites au moins deux couches métalliques (24, 54, 74, 94, 95, 144) constituent moins de 40 % en poids du stratifié (10, 40, 60, 80, 81, 110).

74. Stratifié selon la revendication 67 (10, 40, 60, 80, 81, 110), dans lequel lesdites au moins deux couches métalliques (24, 54, 74, 94, 95, 144) constituent entre 10 % et 50 % en volume du stratifié (10, 40, 60, 80, 81, 110).

75. Stratifié selon la revendication 67 (10, 40, 60, 80, 81, 110), dans lequel plus de 90 % des fibres (22, 51, 75) sont alignées dans sensiblement la même direction.

76. Stratifié selon la revendication 67 (10, 40, 60, 80, 81, 110), dans lequel 100 % des fibres (22, 51, 75) sont alignées dans sensiblement la même direction.

77. Stratifié selon la revendication 67 (10, 40, 60, 80, 81, 110), dans lequel au moins une partie des fibres (22, 51, 75) est alignée à 45° les unes des autres.

78. Stratifié selon la revendication 67 (10, 40, 60, 80, 81, 110), dans lequel ladite au moins une partie des fibres (22, 51, 75) est alignée dans une pluralité de directions.

79. Stratifié selon la revendication 67 (10, 40, 60, 80, 81, 110), dans lequel lesdites au moins deux couches métalliques (24, 54, 74, 94, 95) comprennent entre 3 et 15 couches.

80. Stratifié selon la revendication 67 (10, 40, 60, 80, 81, 110), dans lequel ladite au moins une couche de composite polymère comprend entre 3 et 15 couches de composite polymère.

81. Stratifié selon la revendication 67 (10, 40, 60, 80, 81, 110), dans lequel lesdites au moins deux couches métalliques (24, 54, 74, 94, 95) reçoivent un prétraitement superficiel.

82. Stratifié selon la revendication 81 (10, 40, 60, 80, 81, 110), dans lequel le prétraitement comprend l'anodisation à l'acide phosphorique.

83. Stratifié selon la revendication 81 (10, 40, 60, 80, 81, 110), dans lequel le prétraitement comprend une préparation de surface sol-gel.

84. Stratifié selon la revendication 67 (10, 40, 60, 80, 81, 110), comprenant en outre au moins une couche d'interphase sol-gel disposée entre lesdites au moins deux couches métalliques (24, 54, 74, 94, 95, 144) et l'au moins une couche de composite polymère.

85. Stratifié selon la revendication 67 (10, 40, 60, 80, 81, 110), comprenant en outre au moins une couche centrale (122, 152) disposée entre lesdites au moins deux couches métalliques (24, 54, 74, 94, 95, 144).

86. Stratifié selon la revendication 55 (10, 40, 60, 80, 81, 110), dans lequel ladite au moins une couche centrale (122, 152) comprend un coeur en nid d'abeille.

87. Procédé de production d'un stratifié fibres-métal (10, 40, 60, 80, 81, 110), le procédé comprenant :
l'utilisation d'une pluralité de couches métalliques (24, 54, 74, 94, 95, 144) ;
l'alignement d'une pluralité de fibres polymères (22, 51, 75) ayant un module d'élasticité supérieur à 270 GPa dans ladite au moins une couche de fibres (20, 50, 70, 71, 72, 93, 140) ; et
l'intercalation de ladite au moins une couche de fibres (20, 50, 70, 71, 72, 93, 140) entre la pluralité de couches métalliques (24, 54, 74, 94, 95, 144) ; **caractérisé en ce que**
les fibres polymères comprennent des fibres de polydiimidazopyridinylène.

88. Procédé selon la revendication 87, comprenant en outre la liaison de ladite au moins une couche de fibres de module élevé (20, 50, 70, 71, 72, 93, 140) à la pluralité de couches métalliques (24, 54, 74, 94, 95, 144) adjacentes à la couche de fibres de module élevé (20, 50, 70, 71, 72, 93, 140).

89. Procédé selon la revendication 87, comprenant en outre le prétraitement de la pluralité de couches métalliques (24, 54, 74, 94, 95, 144).

90. Procédé selon la revendication 89, dans lequel le prétraitement comprend le prétraitement avec un revêtement sol-gel.

91. Procédé selon la revendication 87, dans lequel les fibres de polydiimidazopyridinylène comprennent les fibres de poly{2,6-diimidazo[4,5-b4',5'-e]pyridinylène-1,4(2,5-dihydroxy)phénylène}.

92. Procédé selon la revendication 87, dans lequel la pluralité de couches métalliques (24, 54, 74, 94, 95, 144) comprend un alliage d'aluminium.

93. Procédé selon la revendication 87, dans lequel la pluralité de couches métalliques (24, 54, 74, 94, 95, 144) comprend un alliage de titane.

94. Procédé selon la revendication 87, dans lequel la pluralité de couches métalliques (24, 54, 74, 94, 95, 144) comprend un alliage d'acier inoxydable.

95. Procédé selon la revendication 87, dans lequel la matrice de résine comprend une résine époxy.

96. Procédé selon la revendication 87, dans lequel lesdites au moins deux couches métalliques (24, 54, 74, 94, 95, 144) constituent moins de 40 % en poids du stratifié (10, 40, 60, 80, 81, 110).

97. Procédé selon la revendication 87, dans lequel lesdites au moins deux couches métalliques (24, 54, 74, 94, 95, 144) constituent entre 10 % et 50 % en volume du stratifié (10, 40, 60, 80, 81, 110).

98. Procédé selon la revendication 87, comprenant en outre la formation d'un coeur creux (122, 152) entre la pluralité de couches de feuille métalliques (24, 54, 74, 94, 95, 144).

99. Procédé selon la revendication 98, dans lequel la formation d'un coeur creux (122, 152) comprend la formation d'un coeur en nid d'abeille.

100. Stratifié fibres-métal produit selon le procédé selon la revendication 88.

101. Stratifié selon la revendication 100, produit selon le procédé comprenant en outre la liaison de ladite au moins une couche de fibres de module élevé (20, 50, 70, 71, 72, 93, 140) à la pluralité de couches métalliques (24, 54, 74, 94, 95, 144) adjacentes à la couche de fibres de module élevé (20, 50, 70, 71, 72, 93, 140).

102. Stratifié selon la revendication 100, produit selon le procédé comprenant en outre le prétraitement de la pluralité de couches métalliques (24, 54, 74, 94, 95, 144).

103. Procédé selon la revendication 102, dans lequel le prétraitement comprend le prétraitement avec un revêtement sol-gel.
